# EUROPÄISCHE PATENTANMELDUNG

(11) **EP 0 882 661 A1**
(43) Veröffentlichungstag der Anmeldung: **09.12.1998**
(21) Anmeldenummer: 98250185.0
(22) Anmeldetag: 28.05.1998
(51) Int. Cl.: B65G 13/075

(54) **Gefällerollenbahn mit gebremsten Tragrollen und Verfahren zu deren Betrieb**

(30) Priorität: 02.06.1997 DE 19724194
(71) Anmelder: MANNESMANN Aktiengesellschaft, 40213 Düsseldorf (DE)
(72) Erfinder: Kratz, Helmut, 63110 Rodgau (DE); Hartmann, Hans-Jürgen, 63179 Obertshausen (DE)
(74) Vertreter: Presting, Hans-Joachim, Dipl.-Ing.

(57) **Zusammenfassung**

Die Erfindung betrifft eine Gefällerollenbahn mit in Förderrichtung (F) gesehen hintereinander angeordneten Tragrollen (3, 3a) für das Fördergut (5), die zwischen parallel und mit Abstand zueinander verlaufenden Längsträgern (2) frei drehbar gelagert sind, und mit mindestens einzelnen Tragrollen (3) zugeordneten Bremselementen (11), die in Abhängigkeit der Abaufgeschwindigkeit des Fördergutes (5) zur Abbremsung des Fördergutes (5) an die Tragrollen (3) anlegbar sind,

Um eine Gefällerollenbahn mit Bremsrollen zu schaffen, die einen weiten Bereich von Gewichten des Stückguts eine schonende Abbremsung und Förderung ermöglicht, wird vorgeschlagen, daß im Verlauf der Gefällerollenbahn (1) mindestens eine Sensoreinheit (6) angeordnet ist, die im wesentlichen aus einem ersten Sensorelement (7) und einem in Förderrichtung (F) hiervon beabstandeten zweiten Sensorelement (8) mit jeweils zugeordneten Schaltungen (9,10) besteht, über die die Ablaufgeschwindigkeit des Förderguts (3) für die Betätigung der Bremselemente (11) bestimmbar ist.

Außerdem wird als Lösung dieser Aufgabe ein Verfahren zum Betrieb einer Gefällerollenbahn mit Bremsrollen vorgeschlagen, das sich im wesentlichen dadurch auszeichnet, daß über mindestens eine im Verlauf der Gefällerollenbahn (1) angeordnete Sensoreinheit (6) mit im wesentlichen einem ersten Sensorelement (7) und ein hiervon in Förderrichtung (F) beabstandetes zweites Sensorelement (8) mit jeweils zugeordneten Schaltungen (9,10) die Ablaufgeschwindigkeit des Förderguts (3) für die Betätigung der Bremselemente (11) bestimmt wird.

## Beschreibung

Die Erfindung betrifft eine Gefällerollenbahn mit gebremsten Tragrollen für das Fördergut gemäß dem Oberbegriff des Anspruchs 1 und ein Verfahren zum Betrieb einer Gefällerollenbahn mit gebremsten Tragrollen gemäß dem Oberbegriff des Anspruchs 9.

Aus der deutschen Offenlegungsschrift DE 24 14 983 ist bereits eine Gefällerollenbahn bekannt, deren Förderfläche aus einer Kombination von frei drehbaren und gebremsten Tragrollen gebildet ist. Vorzugsweise ist in Förderrichtung gesehen jede fünfte oder sechste Tragrolle abbremsbar. Die gebremsten Tragrollen bestehen im wesentlichen jeweils aus runden Rohrabschnitten, in denen Bremsbeläge angeordnet sind, die zum Abbremsen der Tragrolle über Fliehkraftwirkungen an die Innenseite der Rohres anlegbar sind. Die auf die Bremsbeläge einwirkenden Fliehkräfte werden durch Rotation der die Bremsbeläge betätigenden Bremshebel erzeugt. Die Bremshebel sind hierzu über ein Getriebe mit dem Rohr verbunden, so daß deren Geschwindigkeit etwa das neunfache der Geschwindigkeit des Rohres der Tragrolle beträgt. Die Bremseigenschaften der Bremsbeläge sind zusätzlich über gegen die Fliehkraft wirkende Federelemente einstellbar. Die von den Bremsbelägen von innen auf die gebremste Tragrolle aufgebrachte Bremskraft ist somit abhängig von der Drehgeschwindigkeit der Tragrolle und nimmt mit zunehmender Drehgeschwindigkeit zu.

Nachteilig erweist sich an dieser Gefällerollenbahn, daß von den gebremsten Tragrollen grundsätzlich jedes hierüber gefördertes Stückgutteil abgebremst wird und die Stückgutteile ein Mindestgewicht aufweisen müssen, um den Anlaufwiderstand der gebremsten Rollen überwinden zu können. Auch erweist sich die gebremste Tragrolle durch die Vielzahl der Bauteile als konstruktiv sehr aufwendig.

Des weiteren ist bereits aus der deutschen Offenlegungsschrift DE 44 09 968 A1 ein Bausatz zum Bremsen von Tragrollen von Rollenförderern bekannt. Dieser Bausatz soll sich zum nachträglichen Einbau in bereits bestehende Rollenförderer mit antreibbaren und frei drehbaren Tragrollen, insbesondere von Staurollenförderern eignen und besteht im wesentlichen aus an die Tragrollen anlegbaren Bremslamellen zum Abbremsen der Tragrollen. Jede Bremslamelle ist hierzu jeweils auf einem verschwenk- oder verschiebbaren Lamellenhalter befestigt, der auf das in oder außer Eingriff mit der jeweiligen Tragrolle bringbare Antriebsmittel montiert ist.

Der vorliegenden Erfindung liegt die Aufgabe zugrunde, eine Gefällerollenbahn mit Bremselementen zu schaffen, die auch bei einer weiten Variation der Gewichte des Stückguts dessen schonende Abbremsung und Förderung ermöglicht.

Diese Aufgabe wird bei einer Gefällerollenbahn mit in Förderrichtung gesehen hintereinander angeordneten Tragrollen für das Fördergut durch die im Anspruch 1 aufgeführten Merkmale gelöst. Die Lösung der Aufgabe in Bezug auf das Verfahren zum Betrieb einer Gefällerollenbahn ist in Anspruch 9 angegeben. Vorteilhafte Ausgestaltungen der Erfindung sind in den Unteransprüchen 2 bis 8 sowie 10 bis 12 angegeben.

Erfindungsgemäß wird durch die Anordnung von mindestens einer Sensoreinheit im Verlauf der Gefällerollenbahn, die im wesentlichen aus einem ersten Sensorelement und einem in Förderrichtung hiervon beabstandeten zweiten Sensorelement mit jeweils zugeordneten Schaltungen besteht, erreicht, daß indirekt die Ablaufgeschwindigkeit des Förderguts ermittelt werden kann und hierüber bei Bedarf der Sensoreinheit nachgeordnete Bremselemente zum Abbremsen des Förderguts betätigbar sind. Hierdurch wird in Abhängigkeit von der Ablaufgeschwindigkeit des Förderguts eine Vergleichmäßigung der Fördergeschwindigkeiten unabhängig von dem Gewicht des Förderguts erreicht und somit werden zu hohe Endgeschwindigkeiten bei der Übergabe des Förderguts auf einen Anschlußförderer oder in einen Aufnahmebehälter vermieden. Das Fördergut wird daher besonders schonend behandelt.

Darüber hinaus ist durch die Ausbildung der Rollenbahn mit frei drehbaren Tragrollen, die nur in Abhängigkeit von der Ablaufgeschwindigkeit des Förderguts abgebremst werden, gewährleistet, daß leichte Fördergüter mit geringer Ablaufgeschwindigkeit nicht zusätzlich über gebremste Tragrollen oder deren Anlaufwiderstand verlangsamt werden. Die Durchsatzleistung der Gefällerollenbahn wird somit erhöht. In bezug auf den Transport von leichten Fördergütern hat sich in Zusammenhang mit der vorliegenden Erfindung als vorteilhaft erwiesen, die Bremselemente über die Sensoreinheit erst nach Überschreiten einer vorbestimmten Grenzgeschwindigkeit zu betätigen, da hierdurch auch leichte Fördergüter bei gleichzeitig geringen Neigungswinkeln der Gefällerollenbahn sicher gefördert werden können. Die Ermittlung der Grenzgeschwindigkeit kann besonders einfacherweise über einen Vergleichs-Baustein erfolgen, der bei bekannten Abstand der in Förderrichtung voneinander beabstandeten Sensorelemente die Zeit zwischen der Betätigung des ersten und des zweiten Sensorelementes mit einer vorgegebenen Zeit vergleicht. Ist die benötigte Zeit geringer als die vorgegebene Zeit, werden die Bremselemente des stromabwärts folgenden Abschnittes der Gefällerollenbahn an die Tragrollen angelegt und das Fördergut bis zum Stillstand abgebremst. Für den Fall der Überschreitung der vorgegebenen Zeit wird dieser Abschnitt der Gefällerollenbahn von dem Fördergut ungebremst durchfahren.

In einer vorteilhaften Ausgestaltung ist vorgesehen, daß zur Vergleichmäßigung des Stroms der Fördergüter entlang der Gefällerollenbahn die Bremselemente nach Überschreiten einer vorbestimmten Zeit automatisch wieder gelöst werden.

Als besonders vorteilhaft hat sich erwiesen, die Sensorelemente als Opto- oder Ultraschallsensoren auszubilden, die bei Anwesenheit eines Fördergutteils ein Signal senden.

Um die vorgenannten Funktionen zu gewährleisten, ist vorteilhafterweise die Betätigung der Bremselemente über eine elektronische Logikschaltung vorgesehen, die mit dem ersten und zweiten Sensorelement die Sensoreinheit bilden. Die elektronische Logikschaltung besteht im wesentlichen aus einer dem ersten Sensorelement und einer dem zweiten Sensorelement zugeordneten Schaltung. Hiervon hat die erste Schaltung die Aufgabe über zwei UND-Logik-Bausteine, einem Zeitglied und einem Vergleichs-Baustein festzustellen, ob die an der ersten Schaltung einstellbare vorbestimmte Zeit geringer oder größer ist als die von dem Fördergut für den Weg zwischen dem ersten und dem zweiten Sensorelement benötigte Zeit. Anhand des Ergebnisses dieses Vergleiches werden über die dem zweiten Sensorelement zugeordnete zweite Schaltung die den Sensorelementen nachgeschalteten Bremselemente betätigt oder nicht. Zusätzlich enthält die zweite Schaltung neben einem UND-Logik-Baustein ein weiteres zweites Zeitglied, über die die Bremselemente nach einer voreinstellbaren Zeit automatisch gelöst werden.

Desweiteren ist es vorteilhafterweise möglich, eine Gefällerollenbahn mit mehreren in Förderrichtung hintereinander angeordneten Sensoreinheiten und diesen zugeordneten Bremselementen zu versehen, um somit eine Vergleichmäßigung der Fördergeschwindigkeit der Fördergüter über die gesamte Länge der Gefällerollenbahn zu erzielen. Hierzu sind einzelnen Sensoreinheiten zusätzlich über eine Leitung für die Übermittlung des Belegungszustandes des in Förderrichtung gesehen stromabwärts gelegenen gebremsten Abschnittes der Gefällerollenbahn versehen. Dieses Signal wird zusätzlich in die zweite Schaltung des zweiten Sensorelementes eingespeist, so daß für den Fall, daß der stromabwärts gelegene Abschnitt der Gefällerollenbahn noch belegt ist, der von dem Zeitglied gegebene Impuls zum Lösen der Bremselemente überbrückt wird.

Die Erfindung wird nachfolgend anhand eines in Zeichnungen dargestellten Ausführungsbeispieles näher beschrieben. Es zeigen:
- Figur 1: eine Seitenansicht einer Gefällerollenbahn mit gebremsten Tragrollen und
- Figur 2: einen Schaltplan der Ansteuerung der Bremselemente.

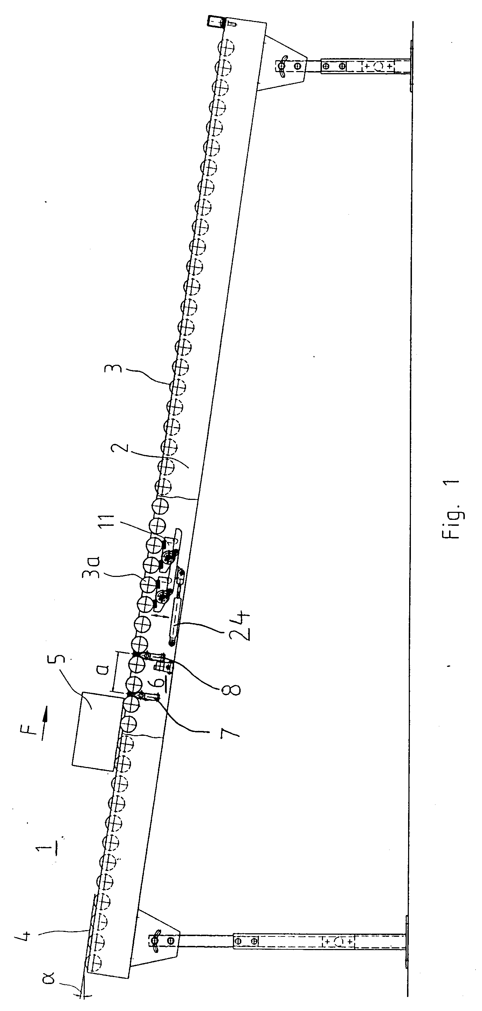

Die Figur 1 zeigt eine Seitenansicht einer Gefällerollenbahn 1, die im wesentlichen aus zwei U-förmigen Längsträgern 2 besteht, zwischen denen sowie an denen frei drehbare Tragrollen 3 und gebremste Tragrollen 3a gelagert sind, deren Drehachsen quer zur Förderrichtung F verlaufen. Die Längsträger 2 und somit die von den Tragrollen 3, 3a gebildete ebene Auflagefläche 4 für das Fördergut 5 ist etwa um einen Winkel α von bis zu etwa 20° aus der Horizontalen nach unten geneigt.

Im Verlauf der Gefällerollenbahn 1 ist zumindest eine Sensoreinheit 6 angeordnet, die im wesentlichen aus einem ersten Sensorelement 7, einem zweiten Sensorelement 8, diesen zugeordneten elektronischen Schaltungen 9,10 und einem mit diesem zusammenwirkenden Bremselement 11 gebildet ist. Die Sensoreinheit 6 hat die Aufgabe für den Fall, daß das Fördergut 5 eine vorgegebene und indirekt an der ersten Schaltung 9 einstellbare Geschwindigkeit überschritten wird, das Fördergut 5 durch Anstellen der Bremselemente 11 über einen Pneumatikzylinder 24 an die Unterseite der Tragrolle 3a abzubremsen. Im vorliegenden Ausführungsbeispiel werden die gebremsten Tragrollen 3a bis zum Stillstand abgebremst und somit das Fördergut 5 angehalten. Nach Verstreichen einer vorgegebenen und in der zweiten Schaltung 10 einstellbaren Zeit wird das Bremselement 11 wieder selbsttätig von der gebremsten Tragrolle 3a gelöst, so daß das Fördergut 5 selbstätig wieder anlaufen kann. Hierdurch wird eine Vergleichmäßigung der Fördergeschwindigkeiten der Fördergüter 5 unter Berücksichtigung der im wesentlichen durch ihr Gewicht und ihre Oberflächenbeschaffenheit bestimmten Fördergeschwindigkeit erzielt.

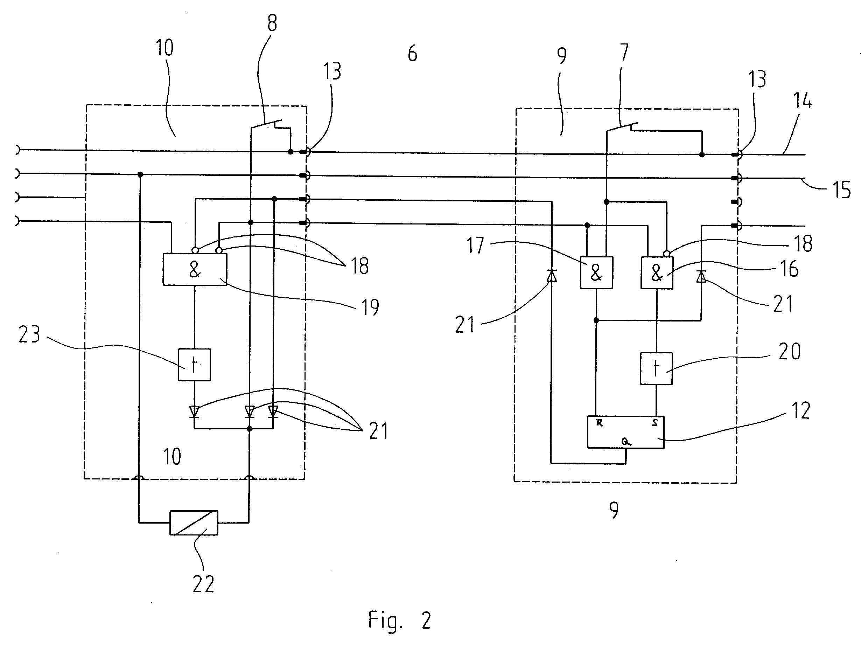

Zur Bestimmung der Geschwindigkeit, mit der die Fördergüter 5 angehalten werden sollen, sind das erste und zweite Sensorelement 7,8 vorgesehen, die in Förderrichtung F gesehen mit einem Abstand a hintereinander angeordnete sind. Im Ausführungsbeispiel entspricht der Abstand a der Teilung der Rollen und liegt etwa im Bereich von 125 mm. Die Geschwindigkeit wird indirekt dadurch ermittelt, daß in dem Moment in dem von dem ersten vorzugsweise als Lichttaster ausgebildeten Sensorelement 7 die Vorderkante des Fördergutes 5 erkannt wird und somit in der ersten Schaltung 9 ein Zeitglied 20 mit einer voreingestellten Zeit von z. B. 2 Sekunden anläuft. Es ist auch möglich, die Sensorelemente 7 und 8 als Opto- oder Ultraschallsensoren auszubilden. Wenn die Vorderkante des Fördergutes 5 das zweite Sensorelement 8 erreicht, wird in der ersten Schaltung 9 in einem Vergleichs-Baustein 12 (siehe Fig. 2) festgestellt, ob die voreingstellte Zeit bereits erreicht ist oder nicht. In Abhängigkeit von dem bekannten Abstand a kann somit die Aussage getroffen werden, ob eine vorherbestimmte Grenzgeschwindigkeit überschritten worden ist oder nicht. Eine Überschreitung der Grenzgeschwindigkeit hat zur Folge, daß von der zweiten Schaltung 10 ein Signal an die dargestellte Betätigungsvorrichtung 24 für das Bremselement 11 gegeben und das Fördergut 5 auf der Gefällerollenbahn 1 angehalten wird. Dementsprechend ist das Bremselement 11 unmittelbar anschließend an das zweite Sensorelement 8 im Verlauf der Gefällerollenbahn 1 angeordnet.

Nachfolgend wird anhand der Figur 2, die ein Prinzipschaltbild zeigt, die Funktion der Sensoreinheit 6 näher erläutert. Die Sensoreinheit 6 besteht im wesentlichen aus dem ersten Sensorelement 7 mit der zugeordneten ersten Schaltung 9 und dem zweiten Sensorelement 8 mit der zugeordneten zweiten Schaltung 10. Die Sensorelemente 7,8 und Schaltungen 9,10 sind jeweils in einem gemeinsamen Gehäuse angeordnet und über angedeutete Steckkontakte 13 untereinander oder mit angrenzenden Sensoreinheiten 6 sowie mit Versorgungsleitungen 14,15 verbindbar. Die Leitungen 14,15, die durch die Schaltungen 9 und 10 durchgeschleift ist, führen die Plusspannung und die Minusspannung. Das als Schalter angedeutete erste Sensorelement 7 ist eingangsseitig mit der Plus-Leitung 14 verbunden und ausgangsseitig mit einem ersten und zweiten UND-Logik-Baustein 16,17 verbunden. Die Verbindung mit dem ersten UND-Logik-Baustein 16 erfolgt über ein Negierungselement 18. Für den Fall, daß von der Vorderkante des Fördergutes 5 das als Lichttaster ausgebildete erste Sensorelement 7 beschattet wird, wird das an den Eingängen der UND-Logik-Bausteine 16 und 17 anstehende Signal unterbrochen. Da der weitere Eingang des ersten UND-Logik-Baustein 16 mit dem weiteren Eingang des zweiten UND-Logik-Baustein 17 sowie über ein Negierungselement 18 mit einem dritten UND-Logik-Baustein 19 der zweiten Schaltung verbunden ist und hier über das zur Zeit geschlossene zweite Sensorelement 8 ein Plus-Signal anliegt, wird von dem ersten UND-Logik-Baustein 16 ausgangsseitig ein Signal an ein erstes Zeitglied 20 weitergegeben. Das Zeitglied 20 ist von außen durch das Gehäuse einstellbar und in dem Ausführungsbeispiel auf eine Zeit von z. B. 2 Sekunden eingestellt. Nach Ablauf dieser Zeit wird von dem ersten Zeitglied 20 ein Signal an den Vergleichs-Baustein 12 weitergegeben. Dieser Vergleichs-Baustein 12 ist zusätzlich eingangsseitig mit dem Ausgang des zweiten UND-Logik-Bausteins 17 verbunden.

Für den Fall, daß die Zeit aus dem ersten Zeitglied 20 bereits abgelaufen ist, d. h. es befindet sich langsamlaufendes Fördergut 5 auf der Gefällerollenbahn 1, wird ein Signal an den Vergleichs-Baustein 12 weitergegeben. Wenn der Vergleichs-Baustein 12 zu diesem Zeitpunkt noch kein Signal von dem zweiten Sensorelement 8, das über den zweiten UND-Logik-Baustein 17 mit dem Vergleichs-Baustein 12 verbunden ist, erhalten hat, wird ausgangsseitig ein Signal über eine Sperrdiode 21 in Richtung der zweiten Schaltung 10 und dort über eine weitere Sperrdiode 21 an einen Elekromagneten 22 übermittelt. Über diesen Elektromagneten 22 wird das Pneumatikventil 24 betätigt, so daß die Bremselemente 11 im gelüfteten Zustand verbleiben. Desweiteren ist der Ausgang des Vergleichs-Bausteins 12 über ein Negierungselement 18 mit dem dritten UND-Logik-Baustein 19 der zweiten Schaltung 10 verbunden. Wenn nun das zweite Sensorelement 8 von der Vorderkante des Förderguts 5 erreicht wird, wird zwar die Stromversorgung von dem zweiten Sensorelement 8 in Richtung des Elektromagneten 22 unterbrochen, die Stromversorgung des Elektromagneten 22 jedoch über die Zuleitung von dem Vergleichs-Baustein 12 erfolgt. Der Vergleichs-Baustein wird zurückgesetzt, wenn das Fördergut 5 die Sensorelemente 7,8 verlassen hat.

Für den Fall, daß schweres Fördergut auf der Gefällerollenbahn 1 gefördert wird und somit nach Betätigung des ersten Sensorelementes 7 und Anlaufen der Zeit in dem ersten Zeitglied 20 bereits vor Ablauf der Zeit von der Vorderkante des Förderguts 5 das zweite Sensorelement 8 beschattet wird, erhält der erste UND-Logik-Baustein 16 ein zweites negatives Signal, dadurch wir das Zeitglied 20 auf 0 s Zurückgestellt. Der Vergleichsbaustein 12 gibt ausgangsseitig kein Signal an die Schaltung 10 weiter. Somit liegt am dritten UND-Logik-Baustein 19 eine 0 an. Mit der Beschattung des zweiten Sensorelementes 8 durch die Vorderkante des Fördergutes 5 wird zusätzlich über ein Negierungselement 18 ein weiteres Signal an den dritten UND-Logik-Baustein 19 gesandt, dessen zweites anstehendes Signal aus dem Vergleichs-Baustein 12 ebenfalls negativ ist, so daß ausgangsseitig das nachgeschaltete zweite Zeitglied 23 betätigt wird. Dieses Zeitglied 23 ist ebenfalls auf z. B. 2 Sekunden eingestellt, und versorgt über eine weitere Sperrdiode 21 nach Verstreichen der Zeit den Elektromagneten 22 mit Strom. Dies hat zur Folge, daß die Bremselemente 11 automatisch nach Verstreichen der Zeit gelüftet werden und das Fördergut 5 wieder anläuft.

Desweiteren ist es möglich im Verlauf einer Gefällerollenbahn 1 eine Vielzahl von hintereinander angeordneten Sensoreinheiten 6 anzuordnen, um die Fördergeschwindigkeit des Fördergutes 5 auf der Gefällerollenbahn 1 zu vereinheitlichen. Um ein Aufeinanderfahren der Fördergüter 5 zu vermeiden, müssen die einzelnen Sensoreinheiten 6 schaltungsmäßig miteinander verbunden werden. Hierfür ist vorgesehen, den dritten UND-Logik-Baustein 19 mit einem weiteren Eingang zu versehen, der von dem in Förderrichtung F gesehen stromabwärts gelegenen bremsbaren Abschnitt der Gefällerollenbahn 1 zusätzlich ein sogenanntes Belegt-Signal erhält, so daß ein Lösen der Bremselemente 11 nur möglich ist, wenn der in Förderrichtung F gesehen vorhergehende Abschnitt der Gefällerollenbahn 1 frei ist.

### Bezugszeichenliste

- 1: Gefällerollenbahn
- 2: Längsträger
- 3: Tragrollen
- 3a: gebremste Tragrollen
- 4: Auflagefläche
- 5: Fördergut
- 6: Sensoreinheit
- 7: erstes Sensorelement
- 8: zweites Sensorelement
- 9: erste Schaltung
- 10: zweite Schaltung
- 11: Bremselement
- 12: Vergleichs-Baustein
- 13: Steckkontakt
- 14: Leitung
- 15: Leitung
- 16: erster UND-Logik-Baustein
- 17: zweiter UND-Logik-Baustein
- 18: Negierungselement
- 19: dritter UND-Logik-Baustein
- 20: erstes Zeitglied
- 21: Sperrdiode
- 22: Elektromagnet
- 23: zweites Zeitglied
- 24: Pneumatikzylinder
- a: Abstand
- F: Förderrichtung
- α: Winkel

## Patentansprüche

1. Gefällerollenbahn mit in Förderrichtung (F) gesehen hintereinander angeordneten Tragrollen (3, 3a) für das Fördergut (5), die zwischen parallel und mit Abstand zueinander verlaufenden Längsträgem (2) frei drehbar gelagert sind, und mit mindestens einzelnen Tragrollen (3) zugeordneten Bremselementen (11), die in Abhängigkeit der Ablaufgeschwindigkeit des Fördergutes (5) zur Abbremsung des Fördergutes (5) an die Tragrollen (3) anlegbar sind,
dadurch gekennzeichnet,
daß im Verlauf der Gefällerollenbahn (1) mindestens eine Sensoreinheit (6) angeordnet ist, die im wesentlichen aus einem ersten Sensorelement (7) und einem in Förderrichtung (F) hiervon beabstandeten zweiten Sensorelement (8) mit jeweils zugeordneten Schaltungen (9,10) besteht, über die die Ablaufgeschwindigkeit des Förderguts (3) für die Betätigung der Bremselemente (11) bestimmbar ist.

2. Gefällerollenbahn nach Anspruch 1,
dadurch gekennzeichnet,
daß die Bremselemente (11) über die Sensoreinheit (6) erst nach Überschreiten einer vorbestimmten Grenzgeschwindigkeit betätigbar sind.

3. Gefällerollenbahn nach Anspruch 2,
dadurch gekennzeichnet,
daß das Überschreiten der Grenzgeschwindigkeit bei bekannten Abstand der Sensorelemente (7,8) in Förderrichtung (F) zueinander über einen Vergleichs-Baustein (12) durch einen Vergleich der benötigten Zeit zwischen der Betätigung des ersten und des zweiten Sensorelements (8) durch das Fördergut (5) und einer vorbestimmten Zeit ermittelbar ist.

4. Gefällerollenbahn nach Anspruch 2 oder 3,
dadurch gekennzeichnet,
daß die Bremselemente (11) über die Sensoreinheit (6) nach Überschreiten einer vorbestimmten Zeit lösbar sind.

5. Gefällerollenbahn nach einem der Ansprüche 1 bis 4,
dadurch gekennzeichnet,
daß die Sensorelemente (7,8) als Opto- oder Ultraschallsensoren ausgebildet sind.

6. Gefällerollenbahn nach einem der Ansprüche 1 bis 5,
dadurch gekennzeichnet,
daß die dem ersten Sensorelement (7) zugeordnete Schaltung (9) im wesentlichen aus einem ersten UND-Logikbaustein (16), einen zweiten UND-Logikbaustein (17), einem Zeitglied (20) und einem Vergleichs-Baustein (12) sowie die dem zweiten Sensorelement (8) zugeordnete Schaltung (10) im wesentlichen aus einem dritten UND-Logikbaustein (19) und einem zweiten Zeitglied (23) gebildet ist, der erste UND-Logikbaustein (16) eingangsseitig über ein Negierungselement (18) mit dem ersten Sensorelement (7), mit dem Eingang des zweiten UND-Logikbausteins (17) und über ein Negierungselement (18) mit dem Eingang des dritten UND-Logikbausteins (19) verbunden ist, der erste UND-Logikbaustein (16) ausgangsseitig über das erste Zeitglied (20) mit dem Vergleichs-Baustein (12) verbunden ist, der eingangsseitig zusätzlich mit dem Ausgang des zweiten UND-Logikbausteins (17) und ausgangsseitig über eine Speerdiode (21) mit dem Eingang des dritten UND-Logikbaustein (19) und einem Elektromagneten (22) eines Schaltventils für die Ansteuerung der Bremselemente (11) verbunden ist, der zweite Eingang des zweiten UND-Logikbaustein (17) mit dem ersten Sensorelement (7) verbunden ist, der dritte UND-Logikbaustein (19) ausgangsseitig über das zweite Zeitglied (23) und eine Sperrdiode (21) mit dem Elektromagneten (22) verbunden ist und das zweite Sensorelement (8) über ein Negierungselement (18) mit den Eingängen des ersten, zweiten und über ein Negierungselement (18) mit dem dritten UND-Logikbausteins (19) und über eine Sperrdiode (21) mit dem Elektromagneten (22) verbunden ist.

7. Gefällerollenbahn nach einem der Ansprüche 1 bis 6,
dadurch gekennzeichnet,
daß in Förderrichtung (F) der Gefällerollenbahn (1) mehrere Sensoreinheiten (6) mit Abstand hintereinander angeordnet die benachbarten Sensoreinheiten (6) über eine Leitung (14,15) für die Übermittlung des Belegungszustandes des den Bremselementen (11) zugeordneten Abschnittes der Gefällerollenbahn (1) verbunden sind und über ein Belegt-Signal der in Förderrichtung (F) der Gefällerollenbahn (1) gesehen stromaufwärts gelegene Abschnitt der Gefällerollenbahn (1) mit den Bremselementen (11) im Bremszustand bring- oder haltbar ist.

8. Gefällerollenbahn nach Anspruch 6 und 7,
dadurch gekennzeichnet
daß der zweite UND-Logikbausteins (17) und über eine Sperrdiode (21) für die Weiterleitung eines Freigabesignals an die in Förderrichtung (F) gesehen stromaufwärts benachbarte Sensoreinheit (6) mit dieser verbunden ist.

9. Verfahren zum Betrieb einer Gefällerollenbahn, insbesondere einer Gefällerollenbahn nach einem der Ansprüche 1 bis 8, mit in Förderrichtung (F) gesehen hintereinander angeordneten Tragrollen (3, 3a) für das Fördergut (5), die zwischen parallel und mit Abstand zueinander verlaufenden Längsträgern (2) frei drehbar gelagert sind, und mit mindestens einzelnen Tragrollen (3) zugeordneten Bremselementen (11), die in Abhängigkeit der Ablaufgeschwindigkeit des Fördergutes (5) an die Tragrollen (3) zum Abbremsen des Fördergutes (5) angelegt werden,
dadurch gekennzeichnet,
daß über mindestens eine im Verlauf der Gefällerollenbahn (1) angeordnete Sensoreinheit (6) mit im wesentlichen einem ersten Sensorelement (7) und ein hiervon in Förderrichtung (F) beabstandetes zweites Sensorelement (8) mit jeweils zugeordneten Schaltungen (9,10) die Ablaufgeschwindigkeit des Förderguts (3) für die Betätigung der Bremselemente (11) bestimmt wird.

10. Gefällerollenbahn nach Anspruch 9,
dadurch gekennzeichnet,
daß über die Sensoreinheit (6) die Bremselemente (11) erst nach Überschreiten einer vorbestimmten Grenzgeschwindigkeit betätigt werden.

11. Gefällerollenbahn nach Anspruch 9 oder 10,
dadurch gekennzeichnet,
daß das Überschreiten der Grenzgeschwindigkeit bei bekannten Abstand der Sensorelemente (7,8) in Förderrichtung (F) zueinander über einen Vergleichs-Baustein (12) durch einen Vergleich der benötigten Zeit zwischen der Betätigung des ersten und des zweiten Sensorelements (8) durch das Fördergut (5) und einer vorbestimmten Zeit ermittelt wird.

12. Gefällerollenbahn nach Anspruch 11,
dadurch gekennzeichnet,
daß die Bremselemente (11) über die Sensoreinheit (6) nach Überschreiten einer vorbestimmten Zeit gelöst werden.
